# EUROPÄISCHE PATENTSCHRIFT

(11) **EP 2 353 892 B1**
(45) Veröffentlichungstag und Bekanntmachung des Hinweises auf die Patenterteilung: **23.07.2014**
(21) Anmeldenummer: 11000694.7
(22) Anmeldetag: 28.01.2011
(51) Int. Cl.: B60D 1/14, B62D 25/20, B62D 29/00

(54) **Tragbauteil einer Anhängekupplung oder eines Lastenträgers**
Support component of a trailer coupling or a load bearer
Composant de support d'un attelage ou d'un support de charges

(30) Priorität: 30.01.2010 DE 102010006335
(43) Veröffentlichungstag der Anmeldung: 10.08.2011
(73) Patentinhaber: WESTFALIA - Automotive GmbH, 33378 Rheda-Wiedenbrück (DE)
(72) Erfinder: HÖNICKE, Jörg, 38239 Saltzgitter (DE)
(74) Vertreter: Bregenzer, Michael

(56) Entgegenhaltungen:
- EP-A1- 1 022 164
- EP-A1- 1 510 399
- WO-A1-2006/005101
- US-A1- 2005 097 853
- US-A1- 2005 263 984
- US-B1- 6 455 126

## Beschreibung

Die Erfindung betrifft ein Tragbauteil einer Anhängekupplung für ein Kraftfahrzeug oder eines an einem Heck eines Kraftfahrzeugs anordenbaren Lastenträgers, gemäß dem Oberbegriff des Anspruchs 1.

Ein derartiges Tragbauteil geht aus EP 1 510 399 A1 hervor.

Ein derartiges Tragbauteil ist beispielsweise ein Querträger, der am Heck eines Kraftfahrzeuges anordenbar oder angeordnet ist und einen Halter für einen Kupplungsarm trägt. Der Kupplungsarm ist an dem Halter beispielsweise schwenkbar gelagert oder von diesem entfernbar. Beim Fahrbetrieb des Kraftfahrzeuges treten verhältnismäßig große Belastungen auf, so dass der Querträger und die Tragstruktur insgesamt, die den Querträger umfasst, eine hohe Belastbarkeit aufweisen müssen. Auch bei einem eventuellen Aufprall auf das Heck des Kraftfahrzeuges ist es zweckmäßig, wenn das betreffende Tragbauteil eine hohe Belastbarkeit aufweist.

Auch andere Bauteile einer Anhängekupplung müssen eine hohe Belastbarkeit aufweisen, so z.B. der vorher bereits erwähnte Kupplungsarm. Daher wird er in der Praxis als Schmiedebauteil oder Gußbauteil ausgeführt, das heißt er ist ein relativ massives, schweres Bauteil.

Auch bei Lastenträgern, die am Heck des Kraftfahrzeuges anordenbar oder angeordnet sind, ist eine hohe Belastbarkeit gefragt, so dass die auf den Lastenträger aufliegende Last nicht beim Fahrbetrieb des Kraftfahrzeuges zu Beschädigungen führt, gegebenenfalls sogar verloren geht. Somit müssen vergleichsweise schwere und voluminöse Bauteile verwendet werden, beispielsweise massive Tragstäbe oder dicke Tragrohre, was das Kraftfahrzeug jedoch schwer macht.

Wenn also ein Tragbauteil der eingangs genannten Art entsprechende Belastungen aushalten soll, wird man es in der Praxis voluminös und schwer ausgestalten, was nicht nur einen hohen Materialverbrauch zur Folge hat, sondern auch beim späteren Betrieb hohe Folgekosten, insbesondere aufgrund eines erhöhten Energieverbrauches beim Betrieb des Kraftfahrzeuges.

Es ist daher die Aufgabe der vorliegenden Erfindung, ein Tragbauteil einer Anhängekupplung für ein Kraftfahrzeug oder eines an einem Heck eines Kraftfahrzeugs anordenbaren Lastenträgers bereitzustellen, das bei hoher mechanischer Belastbarkeit, insbesondere Steifigkeit, kompakt ist und vorzugsweise leicht.

Zur Lösung der Aufgabe ist ein Tragbauteil gemäß der technischen Lehre des Anspruchs 1 vorgesehen.

Das erfindungsgemäße Konzept sieht vor, dass das Tragbauteil an sich ein Hohlkörper bzw. eine Hohlstruktur darstellt, die durch die Versteifungsmasse insgesamt oder vorzugsweise nur abschnittsweise ausgesteift ist. Der Rohrkörper kann zumindest bis zu seinem Verfüllen mit der Versteifungsmasse Öffnungen aufweisen, z.B. an seinen Längsenden und/oder an einer Umfangswand. Es ist auch möglich, dass auch nach dem Verfüllen mit der Versteifungsmasse eine Querseite und/oder eine Längsendseite des Rohrkörpers offen bleibt oder mit einem Deckel verschlossen wird. Mithin ist ein Rohrkörper im Sinne der Erfindung zwar in einer bevorzugten Ausführungsform, aber nicht in jedem Fall als ein umfangsseitig vollständig geschlossener Körper zu verstehen.

Die Versteifungsmasse ist während eines Einbringens in den Innenraum verformbar, beispielsweise flüssig oder pastös, härtet aber später aus, so dass sie den Teilabschnitt, in dem sie angeordnet ist, versteifen kann. Somit kann man beispielsweise einen Rohrkörper aus Metall, beispielsweise Stahl oder Aluminium oder auch einer sonstigen Metalllegierung verwenden, der später dann mittels der Versteifungsmasse ausgesteift ist. Es ist also nicht notwendig, dass man den Rohrkörper überdimensioniert, beispielsweise mit einem entsprechend großen Umfang ausstattet bzw. die Umfangswand entsprechend stark oder dick ausgestaltet. Vielmehr wird durch die Versteifungsmasse, insbesondere partiell, das heißt nicht über die gesamte Längserstreckungsrichtung, sondern nur über einen Teil davon, eine Versteifung bereitgestellt. Dadurch reduziert sich der Materialverbrauch und die Kosten sind gering. Die Belastbarkeit des Tragbauteils, mithin also des Rohrabschnitts oder Hohlkörpers, wird durch die Versteifungsmasse zweckmäßigerweise lokal erhöht. Somit können nicht belastete oder geringer belastete Bereiche des Rohrkörpers ohne Füllmaterial verbleiben, während dort, wo Belastungsspitzen zu erwarten sind, die erfindungsgemäß eingebrachte Versteifungsmasse wirkt.

Als Füllmaterial kann man beispielsweise einen Kunststoff, Beton oder auch eine sonstige Verfüllmasse verwenden. An dieser Stelle sei bemerkt, dass auch eine Kompositmasse, die mehrere Verfüllmaterialien enthält, die beim Aushärten eine Verbindung miteinander eingehen, verwendbar ist.

Die Versteifungsmasse härtet also nach dem Einbringen in den Hohlraum aus. Sie kann vor dem Einbringen flüssig, pastös oder in sonstiger Weise verformbar sein.

Der Innenraum weist zweckmäßigerweise an mindestens einem Teilabschnitt seiner Längserstreckungsrichtung einen Hohlraum auf. Dort ist er quasi unversteift, während er dort, wo die Versteifungsmasse angeordnet ist, eine höhere Steifigkeit aufweist. Es versteht sich, dass Abschnitte, die unversteift sind, und Abschnitte mit Versteifungsmasse entlang der Längserstreckungsrichtung aufeinanderfolgend hintereinander und/oder parallel bzw. quer zur Längserstreckungsrichtung nebeneinander angeordnet sein können. Beispielsweise hat der Rohrkörper mehrere, bezüglich der Längserstreckungsrichtung nebeneinander angeordnete Hohlräume, die später insgesamt zumindest teilweise mit der erfindungsgemäßen Versteifungsmasse ausgesteift sind.

Zum Einbringen der Versteifungsmasse kann man beispielsweise Stempel verwenden. Eine Außenkontur des Stempels oder Stempelkörpers entspricht zweckmäßigerweise einer Innenkontur des Innenraums, der ausgesteift werden soll. Somit ist der Stempel also zu dem Hohlraum sozusagen passend, was ein optimales Einbringen der Versteifungsmasse ermöglicht. Sofern der Hohlraum im Wesentlichen geradlinig ist, kann man beispielsweise einen Stempel mit einem festen Stempelschaft verwenden. Ist jedoch eine Krümmung zu überwinden, könnte man einen flexiblen, zumindest biegbaren, jedoch ansonsten druckfesten Stempelschaft verwenden. Es versteht sich, dass auch ein Ziehen eines Stempelelements oder eines Einpresselementes möglich ist, wobei sich dann zweckmäßigerweise ein Zugteil, z.B. ein Seil oder dergleichen, durch die Versteifungsmasse hindurch oder neben der Versteifungsmasse erstreckt.

Es versteht sich, dass eine Versteifungsmasse, die im unausgehärteten Zustand flüssig ist, nicht unbedingt mittels eines Stempels oder einem sonstigen Hilfsmittel in den entsprechenden Innenraum eingebracht werden muss. Ein einfaches Vergießen kann völlig ausreichend sein.

Weiterhin ist es möglich, die Versteifungsmasse beispielsweise einzuspritzen, vorzugsweise mittels einer Kartusche. Man sieht eventuell der ausgehärteten Versteifungsmasse später noch an, dass sie eingespritzt worden ist. Beispielsweise sieht eine vorteilhafte Ausführungsform der Erfindung vor, dass die Versteifungsmasse aufgrund des Einspritzens eine wellige Oberflächenstruktur an ihrer freien Seite aufweist.

Auch im Sinne eines beispielsweise schrägen, konischen oder sonstigen verlaufenden Übergangs zwischen einerseits einem Hohlraum des Tragbauteils und andererseits einem versteiften Abschnitt oder einem Übergang zwischen zwei versteiften Abschnitten, die mit unterschiedlichen Versteifungsmassen versteift sind, kann es vorteilhaft sein, ein Einspritzverfahren anzuwenden.

Durch eine unebene, insbesondere die vorgenannte wellige, Struktur ist hierbei sogar noch eine bessere Verbindung zwischen unterschiedlichem Versteifungsmaterial aufweisenden versteiften Abschnitten möglich, die auf diesem Wege vorteilhaft miteinander "verzahnt" werden können.

Es versteht sich, dass man die Versteifungsmasse auch in einen flexiblen Körper, beispielsweise einen Schlauch oder dergleichen, einbringen kann und diesen flexiblen Körper sodann in den Hohlraum des Rohrkörpers einbringt. Der flexible Schlauch oder das flexible Element passt sich einer Innenkontur des Innenraumes an.

Ein solcher flexibler Schlauch ein flexibles Einbringelement eignet sich auch dazu, mehrere, unterschiedliche Grundmaterialien aufweisende Versteifungsmassen gleichzeitig in den Hohlraum einzubringen. So können beispielsweise Sequenzen unterschiedlicher Versteifungsmassen verwendet werden, die dann in Längserstreckungsrichtung hintereinander oder quer zur Längserstreckungsrichtung nebeneinander angeordnete Abschnitte des Hohlraumes aussteifen, wenn sie aushärten.

Es versteht sich, dass mit unterschiedlichen Versteifungsmassen versteifte Abschnitte unmittelbar aneinander angrenzen können oder auch zueinander beabstandet sein können. Weiterhin können die Versteifungsmassen unterschiedliche Festigkeit und/oder Steifigkeit aufweisen.

In diesem Zusammenhang sei ohnehin erwähnt, dass die Versteifung auch im Sinne einer Verfestigung der Tragstruktur bzw. des Tragbauteiles wirken kann. Man könnte also auch an Stelle von "Versteifungsmasse" das Wort "Verfestigungsmasse" verwenden.

Weiterhin ist es zweckmäßig, wenn die Versteifungsmasse an der Wand des Rohrkörpers mit einer zumindest geringen, vorteilhaft etwas höhere Adhäsion festsitzt. Auch dies trägt zur Verfestigung des Innenraumes bei.

Eine weitere, später noch in der Beschreibung erläuterte Ausführungsform der Erfindung sieht vor, dass die Versteifungsmasse einen Hohlraum umschließt. Beispielsweise kann dies dadurch erreicht werden, dass die Versteifungsmasse an die Umfangswand nach umfangsseitig außen, beispielsweise radial außen, angespritzt wird.

Auch das Einbringen eines Schlauches, der sozusagen innerhalb der Versteifungsmasse, zweckmäßigerweise im wesentlichen zentral, angeordnet ist und beispielsweise mit einem Gas, insbesondere Luft gefüllt ist, kann einen solchen Hohlraum schaffen, der innerhalb der Versteifungsmasse vorgesehen ist.

Die Versteifungsmasse bzw. Verfestigungsmasse wirkt also im Umfangsbereich bzw. an der Umfangswand, wo sie eine besondere Verfestigungsfunktion oder Versteifungsfunktion für das Tragbauteil leisten kann.

Weiterhin ist es denkbar, dass zum Halten der Versteifungsmasse zumindest während des Aushärtens Haltekörper verwendet werden können, beispielsweise ein Schott oder ein Stempel, das bzw. der nach Aushärten der Versteifungsmasse wieder aus dem Hohlraum optional entfernt wird oder dort verbleibt.

Die Versteifungsmasse weist zweckmäßigerweise eine höhere Druckfestigkeit auf als das Grundmaterial der Umfangswand. So weist beispielsweise Beton eine höhere Druckfestigkeit auf als Metall, das man zweckmäßigerweise für die Umfangswand verwendet.

Auch eine Erhöhung der Zugfestigkeit durch die Versteifungsmasse ist möglich. So weist die Versteifungsmasse in einer bevorzugten Ausgestaltung der Erfindung eine höhere Zugfestigkeit auf als das Grundmaterial der Umfangswand.

Zur Erhöhung einer Zugfestigkeit umfasst die Versteifungsmasse Verstärkungsfasern, beispielsweise Kunststofffasern, Metallfasern oder Kohlefasern. Auch Glasfasern sind möglich.

Die Versteifungsmasse umfasst Verstärkungsfasern mit unterschiedlicher Flexibilität und/oder unterschiedlicher Zugfestigkeit. So können beispielsweise Kunststofffasern und Metallfasern mit unterschiedlicher Festigkeit und Steifigkeit verwendet werden.

Die Versteifungsmasse umfasst zweckmäßigerweise Kunststoff und/oder Beton. Bevorzugt ist ein hochfester Beton.

Dieser Beton oder auch der Kunststoff enthält beispielsweise hochfeste Kunststofffasern und gewellte Metallfasern. Dies führt bei extremen Belastungen zu einer plastischen Verformung. Es bleibt also eine Restfestigkeit, die beispielsweise in weniger beanspruchten Bereichen abgetragen wird. Insgesamt ergibt sich durch das Einlagern von Zuschlagstoffen, insbesondere der vorgenannten Fasern oder Fasergemische ein duktiles Verhalten von beispielsweise Beton.

weiterhin ist es möglich, das die Versteifungsmasse entlang der Längserstreckungsrichtung oder auch quer dazu Werkstoffe mit unterschiedlicher Flexibilität oder Festigkeit enthält. Durch beispielsweise den vorgenannten Schlauch ist es möglich, eine Werkstoffsequenz, das heißt Werkstoffe mit unterschiedlichen Druck-, Zug- oder Flexibilitätseigenschaften nebeneinander oder hintereinander anzuordnen.

Die Versteifungsmasse ist zumindest an einer Seite bezüglich der Längserstreckungsrichtung durch ein Stützelement abgestützt. Dieses Stützelement ist beispielsweise bis zum Aushärten der Versteifungsmasse oder während des Aushärtens der Versteifungsmasse wirksam. Sodann könnte man das Stützelement prinzipiell auch entfernen.

Das Stützelement wird beispielsweise durch eine Ausschäumung des Innenraums mit einem Kunststoffschaum gebildet. Auch Distanzelemente, beispielsweise Schott- oder Stempelkörper oder dergleichen, die sich einerseits beispielsweise am Tragbauteil oder einem weiteren Abschnitt aus Versteifungsmasse abstützen und andererseits den zu stützenden Versteifungsmassen-Abschnitt stützen, können beispielsweise in der Art von Stempeln ausgestaltet sein.

Das Tragbauteil bildet beispielsweise einen Bestandteil einer Tragstruktur, z.B. eines Querträgers und/oder eines Längsträgers, der die Anhängekupplung trägt. Mit diesem Tragbauteil oder der Tragstruktur ist die Anhängekupplung am Kraftfahrzeug befestigbar.

Es ist aber auch denkbar, dass das Tragbauteil beispielsweise ein Bestandteil eines Kupplungsarmes ist, beispielsweise der Kugelhals, an dessen freiem Ende ein Kupplungsstück, insbesondere eine Kupplungskugel, angeordnet ist.

Bei einer erfindungsgemäßen mit Versteifungsmasse verfüllten Kugelstange kann vorgesehen sein, dass beispielsweise ein Kugelstangenarm zunächst stirnseitig offen ist, so dass man die Versteifungsmasse dort einbringen kann, und anschließend mittels des Kupplungsstückes, insbesondere der Kupplungskugel, verschlossen wird. Die Kupplungskugel wird beispielsweise auf den Armabschnitt aufgeschraubt, aufgesteckt, ausgeschweißt, aufgeschrumpft oder aufgeklebt.

Weiterhin ist es möglich, dass das Tragbauteil ein Trägerprofil eines Lastenträgers oder ein sonstiges Bauteil eines Lastenträgers ist.

Nachfolgend werden Ausführungsbeispiele der Erfindung anhand der Zeichnung erläutert. Es zeigen:
- Figur 1: eine perspektivische Schrägansicht einer Anhängekupplung, deren Kupplungsarm in erfindungsgemäßer Weise eine Versteifungsmasse enthält,
- Figur 2: eine Querschnittsansicht der Anhängekupplung gemäß Figur,1 etwa entlang einer Schnittlinie A-A in Figur 1,
- Figur 3: eine Seitenansicht einer Anhängekupplung mit einem schwenkbaren, erfindungsgemäß mit Versteifungsmasse ausgesteiftem Kupplungsarm, und
- Figur 4: eine schematische Draufsicht auf eine Tragstruktur der Anhängekupplung gemäß Figur 3.

Bei der nachfolgenden Beschreibung sind gleiche oder gleichartige Bauteile mit denselben Bezugszeichen versehen. Zur Verdeutlichung von Unterschieden sind teilweise die Buchstaben a, b und c verwendet.

Bei den Anhängekupplungen 10a, 10b ist jeweils ein Fahrzeug-Halter 11a, 11b mittels einer Tragstruktur 45a, 45b an einem Kraftfahrzeug 17 befestigt. Die Fahrzeug-Halter 11a, 11b tragen jeweils einen Kupplungsarm 12a, 12b, an dessen freiem Ende 13 eine Kupplungskugel 14 zum Anhängen eines Anhängers 15 befestigt ist. Die beiden Fahrzeug-Halter 11a, 11b sind beispielsweise an Querträgern 16a, 16b der Tragstrukturen 45a, 45b befestigt, z.B. angeschweißt, angeschraubt, angeklebt oder dergleichen.

Der Kupplungsarm 12a der Anhängekupplung 10a ist mit einem Kupplungsarm-Steckabschnitt 18a in eine Steckaufnahme 19a des Fahrzeug-Halters 11a entlang einer Steckachse 24a einsteckbar bzw. daraus auch wieder entnehmbar.

Bei der Anhängekupplung 10b ist eine Schwenklagerung vorgesehen (eine Schwenk-Schiebelagerung oder auch eine Schiebelagerung ist ebenfalls möglich), bei der ein Kupplungsarm-Lagerteil 18b an einem Lagerkopf 19b um eine Schwenkachse 24b schwenkbar ist.

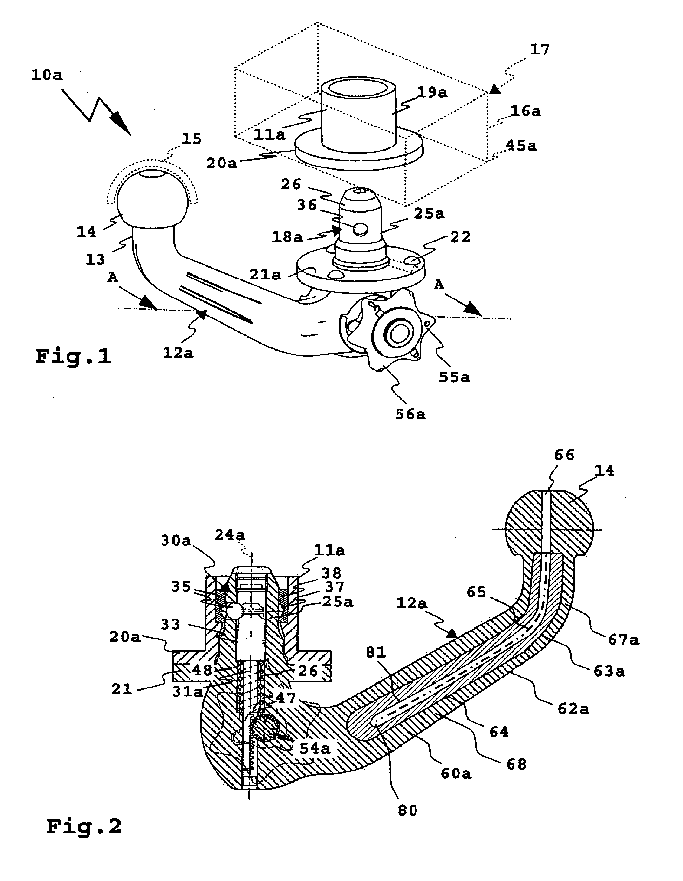

Die Fahrzeug-Halter 11a, 11b umfassen Flanschplatten 20a, 20b, gegen die eine Flanschplatte 21a, die radial vom Kupplungsarm 12a bzw. eine Flanschfläche 21b am Kupplungsarm-Lagerteil 18b spannbar sind, um den Kupplungsarm 12a, 12b bezüglich des Fahrzeug-Halters 11a, 11b ortsfest festzulegen. An den Flanschplatten 20a, 20b sind beispielsweise Formschlusskörper 22, insbesondere Kugeln, die in korrespondierende Formschlussaufnahmen an der Flanschplatte 21a oder der Flanschfläche 21b, insbesondere Kalotten, eingreifen. In Figur 1 sieht man lediglich die Formschlusskörper 22, die sinngemäß auch bei der Anhängekupplung 10b vorhanden sind. In einem Steckende 25a des Kupplungsarms 12a befindet sich ein Aufnahmeraum 26, in dem ein Verriegelungsbolzen 31a einer Verriegelungsanordnung 30a verschieblich gelagert ist, vorliegend entlang der Steckachse 24a. Mit einem Verdrängerkopf 33 des Verriegelungsbolzens 31a können Verriegelungselemente, insbesondere Kugeln, durch Kanäle 36 hindurch, die eine Umfangswandung des Aufnahmeraums 26 durchsetzen, in Formschlussaufnahmen 37 am Fahrzeug-Halter 11a verdrängt werden. Die Formschlussaufnahmen 37 sind beispielsweise am Fahrzeug-Halter 11a ortsfesten Ring 38 vorgesehen.

Die Verriegelungsanordnung 30b funktioniert nach demselben Prinzip wie die Verriegelungsanordnung 30a und umfasst einen Verriegelungsbolzen 31b, der ebenfalls Verriegelungselemente in Formschlussaufnahmen (nicht dargestellt), zur formschlüssigen Verriegelung des Kupplungsarmes 12b bezüglich des Fahrzeug-Halters 11b verdrängt. Der Verriegelungsbolzen 31b ist in einem Lagerrohr verschieblich gelagert, das als Hohlwelle ausgestaltet ist. Das Lagerrohr dient als Lagerwelle oder Lagerachse für das Kupplungsarm-Lagerteil 18b.

Die Verriegelungsbolzen 31a, 31b sind in ihrer Verriegelungsstellung federbelastet, beispielsweise durch eine Feder 47. Zur Entriegelung dienen Betätigungseinrichtungen 55a, 55b, die Handräder 56a, 56b umfassen. Mit diesen können die Verriegelungsbolzen 31a, 31b in ihre Entriegelungsstellung verstellt werden, bei der die Verriegelungselemente 35 aus den Formschlussaufnahmen 37 heraus gelangen können. Beispielsweise ist mit dem Handrad 56a ein Zahnrad 54a drehfest verbunden, dass mit einem Zahnabschnitt am Verriegelungsbolzen 31a kämmt. Die Betätigungseinrichtung 55b umfasst sozusagen eine Fernbedienung und wirkt über einen Bowdenzug 52 auf den Verriegelungsbolzen 31b.

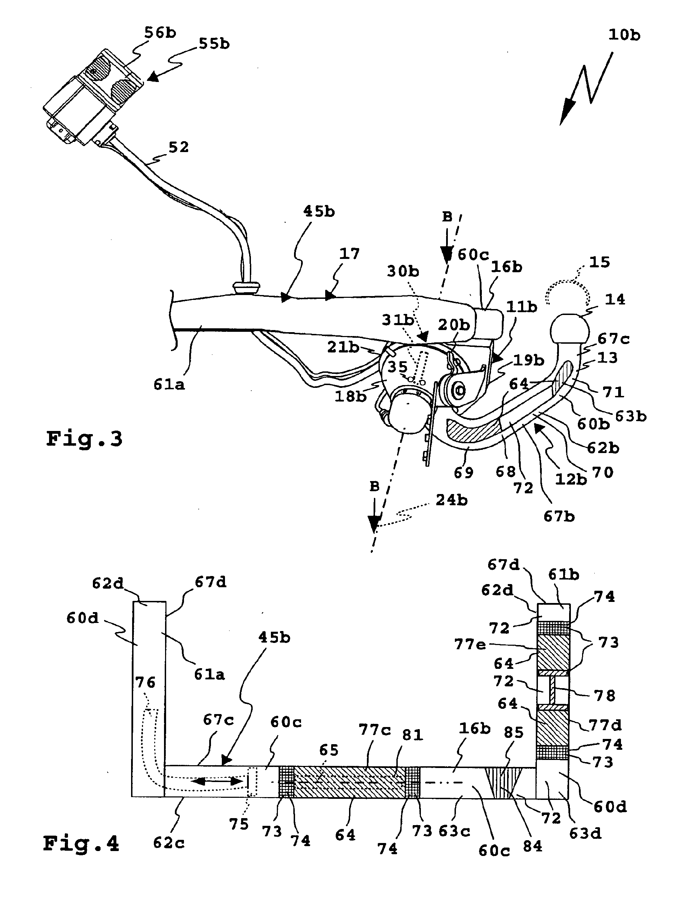

Beim Fahrbetrieb der Anhängekupplungen 10a, 10b treten hohe Belastungen auf. Diese müssen durch die tragenden Bestandteile, das heißt die Tragbauteile der jeweiligen Anhängekupplung 10a, 10b aufgenommen werden. Gleichzeitig ist eine Leichtbauweise gefragt, das heißt die Bestandteile der Anhängekupplungen 10a, 10b sollen möglichst leicht sein, um den Kraftstoffverbrauch des Kraftfahrzeugs 17 gering zu halten. Am Beispiel von Tragbauteilen 60a, 60b, 60c und 60d wird nachfolgend beschrieben, wie bei leichter Bauweise eine hohe Steifigkeit erzielbar ist:
Das Tragbauteil 60a ist beispielsweise vom Kupplungsarm 12a gebildet. Der Kupplungsarm 12b bildet das Tragbauteil 60b.
Der Querträger 16b stellt das Tragbauteil 60c dar. Seitenträger 61a, 61b, die den Querträger 16b tragen, sind als Tragbauteile 60d ausgestaltet, wobei die erfindungsgemäße Ausgestaltung nur beim in Figur 4 rechts dargestellten Seitenträger 61b vorgenommen ist, während der linke Seitenträger 61a noch nicht ausgesteift ist. Die Seitenträger 61a, 61b sowie der Querträger 16b bilden insgesamt die Tragstruktur 45b. An dieser Stelle sei bemerkt, dass selbstverständlich auch der Querträger 16a der Tragstruktur 45a erfindungsgemäß ausgestaltet bzw. versteift sein kann, was jedoch aus Gründen der Übersichtlichkeit nicht beschrieben ist.

Bei den Tragbauteilen 60a-60d begrenzen Umfangswände 62a-62d Innenräume 63a-63d, die ganz oder teilweise mittels einer Versteifungsmasse 64 ausgesteift sind. Nachfolgend wird nur eine einzige Versteifungsmasse 64 genannt, die jedoch unterschiedliche Ausgestaltungen aufweisen kann. So kann die Versteifungsmasse 64 beispielsweise als Grundmaterial Beton enthalten, der mittels Zuschlagstoffen eine höhere Flexibilität und Zugfestigkeit aufweist. Insbesondere ist ein Zuschlag von Fasern, insbesondere Fasern mit unterschiedlichen Qualitäten, beispielsweise Kunststofffasern, Metallfasern, insbesondere gewellte Metallfasern, oder dergleichen vorteilhaft. Die Versteifungsmasse 64 kann aber auch einen Kunststoff umfassen, insbesondere faserverstärkten Kunststoff, beispielsweise glasfaserverstärkten Kunststoff. Der Kunststoff kann beispielsweise ein Epoxidharz sein.

Der Innenraum 63a des Tragbauteils 60a ist über seine gesamte Längserstreckungsrichtung 65 mit der Versteifungsmasse 64 verfüllt. Die Versteifungsmasse 64 wird beispielsweise durch eine Bohrung 66, die die Kupplungskugel 14 durchsetzt, in den Innenraum 63a eingebracht. Es ist vorteilhaft, eine Entlüftung des Innenraums 63a zum Einbringen der Versteifungsmasse 64 vorzusehen.

Ein die Umfangswand 62a bereitstellender Rohrkörper 67a ist beispielsweise aus Metall, insbesondere durch einen Gußprozess hergestellt. Somit besteht also die Umfangswand 62a aus Metall, kann aber verhältnismäßig dünn ausfallen. Dennoch ist die erforderliche Steifigkeit gewährleistet, denn der Innenraum 63a ist mit der Versteifungsmasse 64 versteift. Diese enthält in einer bevorzugten Ausführungsform der Erfindung Fasermaterial, so dass eine hohe Zug- und Biegefestigkeit gewährleistet ist. Man kann auch die Druckfestigkeit dadurch erreichen, dass das Grundmaterial der Versteifungsmasse 64 Beton enthält oder aus Beton besteht.

Der mit der Versteifungsmasse 64 verfüllte Innenraum 63a befindet sich in einem Armabschnitt 68 des Kupplungsarms 12a.

Ein Armabschnitt 68 des Kupplungsarmes 12b ist innen teilweise hohl bzw. mit einer Versteifungsmasse 64 verfüllt. Der Innenraum 63b erstreckt sich im Wesentlichen über den gesamten Armabschnitt 68 ausgehend von einer Krümmung 69 nahe beim Kupplungsarm-Lagerteil 18b, über einen geraden Abschnitt 70 sowie eine weitere Krümmung 71 unterhalb der Kupplungskugel 14. Im Bereich der beiden Krümmungen 69, 71 ist jeweils Versteifungsmasse 64 vorhanden, während der gerade Abschnitt 70 unversteift ist, das heißt einen Hohlraum 72 umfasst. Somit sind also besonders belastete Bereiche des Kupplungsarmes 12a versteift, nämlich die gekrümmten Abschnitte, wohingegen weniger belastete Abschnitte des Rohrkörpers 67b unversteift sind.

Die Tragstruktur 45b (Figur 4) ist ebenfalls erfindungsgemäß versteift. Insbesondere in einem mittleren Abschnitt des Tragbauteils 60c, das heißt des Querträgers 16b, ist die Versteifungsmasse 64 vorgesehen. Die Versteifungsmasse 64 wird seitlich durch Stützelemente 73 abgestützt, nämlich durch Kunststoffschaum-Körper 74. Der Rohrkörper 67c des Tragbauteils 60c wird beispielsweise zunächst mit dem in der Zeichnung rechten Kunststoffschaum-Körper 74 ausgeschäumt. Sodann wird die Versteifungsmasse 64 im noch flüssigen oder pastösen Zustand in den Innenraum 63c eingebracht. Hierfür eignet sich beispielsweise ein Stempel 75, dessen Schaft 76 flexibel, jedoch drucksteif ist. Somit kann die beispielsweise nicht flüssige, jedoch pastöse Versteifungsmasse 64 durch den Seitenträger 61a hindurch in den Querträger 16b eingebracht bzw. eingeschoben werden. Sodann wird der Stempel 75 wieder entfernt und das zweite, in der Zeichnung linke Stützelement 73 eingebracht, beispielsweise durch Ausschäumen. Es versteht sich, dass sich neben den Stützelementen 73 wie in der Zeichnung dargestellt Hohlräume 72 befinden können. Es ist aber auch möglich, dass der Innenraum 63c über seine gesamte Längserstreckungsrichtung 65 mit Ausnahme des mit der Versteifungsmasse 64 ausgesteiften Teilabschnitts 77c Kunststoffschaum enthält, beispielsweise PU-Schaum (PU=Polyurethan).

Der Kunststoffschaum hat den Vorteil, dass er preisgünstig ist und schnell aushärtet. Zudem ist er leicht. Ein weiterer Gesichtspunkt ist, dass der Kunststoffschaum eine innere Versiegelung und somit auch einen Korrosionsschutz für den Rohrkörper 67c darstellt.

Ein Rohrkörper 67d des Seitenträgers 61b besteht ebenfalls zweckmäßigerweise aus Metall, beispielsweise Stahl. Sein Innenraum 63d ist abschnittsweise versteift, jedoch abschnittsweise auch unversteift. Die Versteifung ist dort vorgesehen, wo der Seitenträger 61b besonders stark belastet ist, das heißt beispielsweise dort, wo er von Schrauben oder sonstigen Befestigungsbolzen durchsetzt ist, die zur Befestigung an einer in der Zeichnung nicht dargestellten Karosserie des Kraftfahrzeuges 17 dienen.

Teilabschnitte 77d, 77e einer Längserstreckungsrichtung 65 des Innenraums 63d sind mit der Versteifungsmasse 64 versteift. Die Teilabschnitte 77d, 77e sind zueinander bezüglich der Längserstreckungsrichtung 65 beabstandet. Der Abstand wird durch ein Distanzelement 78 bereitgestellt, das stempelartig ausgestaltet ist. Beispielsweise erstreckt sich ein Distanzstab des Distanzelements 78 zwischen zwei Stützkörpern, die die beiden Teilabschnitte 77d, 77e mit Versteifungsmasse 64 abstützen. Distal außen befinden sich weitere Stützelemente 73 in Gestalt von Kunststoffschaum-Körpern 74, die oben bereits im Zusammenhang mit dem versteiften Teilabschnitt 77c erläutert worden sind.

Das Distanzelement 78 bildet eine Art Brücke oder einen Abstandshalter, der die beiden Teilabschnitte 77d, 77e voneinander getrennt hält. Somit ist also im Bereich des Distanzelementes 78 ebenfalls ein Hohlraum 72 vorhanden.

Es versteht sich, dass innerhalb eines versteiften Abschnittes auch Hohlräume sein können, die von der Versteifungsmasse 64 umgeben sind. Bei dem Kupplungsarm 12a ist beispielsweise ein Hohlraum 80 vorgesehen, der sich im Wesentlichen entlang der gesamten Längsersteckungsrichtung 65 des mit der Versteifungsmasse 64 versteiften oder verfestigten Innenraums 63a erstreckt. Bevorzugt ist der Hohlraum 80 etwa im Zentrum bzw. im Querschnittszentrum angeordnet, so dass nach radial außen oder umfangsseitig außen jeweils Versteifungsmasse 64 die Umfangswand des Armabschnittes 68 aussteift und/oder verfestigt.

Beim Tragbauteil 60c ist optional auch ein Hohlraum 81 möglich, der sich entlang der Längserstreckungsrichtung 65, vorzugsweise zentral bezüglich des Querschnittes des Abschnittes 77c, erstreckt. Der Hohlraum 81 ist beispielsweise durch einen gasgefüllten Schlauch gebildet, der das Zentrum des Teilabschnittes 77c von der Versteifungsmasse 74 zumindest bis zu deren Aushärtung quasi freihält.

Es versteht sich, dass Teilabschnitte mit unterschiedlichen Versteifungsmassen, insbesondere Versteifungsmassen mit unterschiedlicher Festigkeit und/oder Steifigkeit, unmittelbar nebeneinander angeordnet sein können oder auch mit Abstand zueinander. Beispielsweise ist ein Teilabschnitt 85 mit einer Versteifungsmasse 84 ausgesteift, die eine höhere Festigkeit aufweist als die Versteifungsmasse 64. Bei dem Teilabschnitt 85 wird zudem deutlich, dass die Stirnseitenwände eines jeweiligen versteiften Abschnittes quer zur Längserstreckungsrichtung 85 auch schrägverlaufend sein können, was einen optimalen Übergang zwischen einerseits einem versteiften Abschnitt und andererseits einem unversteiften Abschnitt eines erfindungsgemäß versteiften Tragbauteiles möglich macht.

## Patentansprüche

1. Tragbauteil einer Anhängekupplung (10a;10b) für ein Kraftfahrzeug (17) oder eines an einem Heck eines Kraftfahrzeugs (17) anordenbaren Lastenträgers, mit einem Rohrkörper (67a-67d), bei dem eine Umfangswand (62a-62d) einen sich in einer Längserstreckungsrichtung (65) erstreckenden Innenraum (63a-63d) begrenzt, wobei der Innenraum (63a-63d) zumindest über einen Teilabschnitt seiner Längserstreckungsrichtung (65) mit einer Versteifungsmasse (64) ausgesteift ist, **dadurch gekennzeichnet, dass** die Versteifungsmasse (64) während eines Einbringens in den Innenraum (63a-63d) verformbar war und Verstärkungsfasern enthält, die Fasern mit unterschiedlicher Flexibilität und/oder unterschiedlicher Zugfestigkeit umfassen.

2. Tragbauteil nach Anspruch 1, **dadurch gekennzeichnet, dass** der Innenraum (63a-63d) an mindestens einem Teilabschnitt seiner Längserstreckungsrichtung (65) einen Hohlraum (72) bildet.

3. Tragbauteil nach Anspruch 1 oder 2, **dadurch gekennzeichnet, dass** die Versteifungsmasse (64) nach dem Einbringen in den Hohlraum (72) aushärtet.

4. Tragbauteil nach einem der vorhergehenden Ansprüche, **dadurch gekennzeichnet, dass** die Versteifungsmasse (64) eine höhere Druckfestigkeit und/oder Zugfestigkeit aufweist als ein Grundmaterial der Umfangswand.

5. Tragbauteil nach einem der vorhergehenden Ansprüche, **dadurch gekennzeichnet, dass** die Versteifungsmasse (64) als Verstärkungsfasern Kunststofffasern und/oder Metallfasern und/oder Kohlefasern enthält.

6. Tragbauteil nach Anspruch 5, **dadurch gekennzeichnet, dass** die Kunststofffasern Fasern mit unterschiedlicher Flexibilität und/oder unterschiedlicher Zugfestigkeit umfassen.

7. Tragbauteil nach einem der vorhergehenden Ansprüche, **dadurch gekennzeichnet, dass** die Versteifungsmasse (64) Kunststoff und/oder Beton umfasst.

8. Tragbauteil nach Anspruch 7, **dadurch gekennzeichnet, dass** der Beton durch Zuschlag von Fasern, insbesondere Fasern mit unterschiedlicher Flexibilität und/oder unterschiedlicher Zugfestigkeit, ein duktiles Verhalten aufweist.

9. Tragbauteil nach einem der vorhergehenden Ansprüche, **dadurch gekennzeichnet, dass** die Versteifungsmasse (64) entlang der Längserstreckungsrichtung (65) und/oder quer zu der Längserstreckungsrichtung (65) Werkstoffe mit unterschiedlicher Flexibilität oder Festigkeit enthält.

10. Tragbauteil nach einem der vorhergehenden Ansprüche, **dadurch gekennzeichnet, dass** die Versteifungsmasse (64) zumindest an einer Seite bezüglich der Längserstreckungsrichtung (65) durch ein insbesondere bis zu einem Aushärten der Versteifungsmasse (64) und/oder bei einem Aushärten der Versteifungsmasse (64) wirksames Stützelement (73) abgestützt ist.

11. Tragbauteil nach Anspruch 10, **dadurch gekennzeichnet, dass** das Stützelement (73) eine Ausschäumung des Innenraums (63a-63d) mit einem Kunststoffschaum und/oder ein Distanzelement (78) umfasst, das sich an dem Tragbauteil (60a-60d) oder an einem weiteren aus Versteifungsmasse (64) gebildeten Versteifungsabschnitt abstützt.

12. Tragbauteil nach einem der vorhergehenden Ansprüche, **dadurch gekennzeichnet, dass** die Versteifungsmasse (64) in einem zumindest beim Einbringen in den Innenraum (63a-63d) flexiblen Schlauch aufgenommen ist.

13. Tragbauteil nach einem der vorhergehenden Ansprüche, **dadurch gekennzeichnet, dass** es mehrere unmittelbar nebeneinander angeordnete und/oder zueinander beabstandete Abschnitte aufweist, die mit der Versteifungsmasse (64) ausgesteift sind, wobei mindestens zwei Abschnitte vorteilhaft unterschiedliche Festigkeiten und/oder Steifigkeiten aufweisen.

14. Tragbauteil nach einem der vorhergehenden Ansprüche, **dadurch gekennzeichnet, dass** das Tragbauteil (60a-60d) einen Bestandteil einer Tragstruktur (45a; 45b), insbesondere eines Querträgers (16), bildet, mit der die Anhängekupplung (10a;10b) an dem Kraftfahrzeug (17) befestigbar ist, oder eines Kupplungsarms (12a, 12b) oder eines Trägerprofils eines Lastenträgers bildet.

## Claims

1. Carrier part of a trailer coupling (10a; 10b) for a motor vehicle (17) or a load carrier which may be fitted to a rear of a motor vehicle (17), with a tubular body (67a-67d) in which a peripheral wall (62a-62d) bounds an interior (63a-63d) extending in a direction of longitudinal extent (65), wherein the interior (63a-63d) is stiffened with a stiffening compound (64) over a portion of its direction of longitudinal extent (65), **characterised in that** the stiffening compound (64) was deformable during introduction into the interior (63a-63d) and contains reinforcing fibres comprising fibres with different flexibility and/or different tensile strength.

2. Carrier part according to claim 1, **characterised in that** the interior (63a-63d) forms a hollow space (72) in at least one portion of its direction of longitudinal extent (65).

3. Carrier part according to claim 1 or 2, **characterised in that** the stiffening compound (64) cures after introduction into the hollow space (72).

4. Carrier part according to any of the preceding claims, **characterised in that** the stiffening compound (64) has a higher compressive strength and/or tensile strength than the basic material of the peripheral wall.

5. Carrier part according to any of the preceding claims, **characterised in that** the stiffening compound (64) contains plastic fibres and/or metal fibres and/or carbon fibres as reinforcing fibres.

6. Carrier part according to claim 5, **characterised in that** the plastic fibres include fibres of different flexibility and/or different tensile strength.

7. Carrier part according to any of the preceding claims, **characterised in that** the stiffening compound (64) comprises plastic and/or concrete.

8. Carrier part according to claim 7, **characterised in that** the concrete has a ductile behaviour due to the addition of fibres, in particular fibres with different flexibility and/or different tensile strength.

9. Carrier part according to any of the preceding claims, **characterised in that** the stiffening compound (64) contains materials of different flexibility or strength along the direction of longitudinal extent (65) and/or transversely to the direction of longitudinal extent (65).

10. Carrier part according to any of the preceding claims, **characterised in that** the stiffening compound (64), at least on one side relative to the direction of longitudinal extent (65), is supported by a support element (73) active until the stiffening compound (64) has cured and/or during curing of the stiffening compound (64).

11. Carrier part according to claim 10, **characterised in that** the support element (73) comprises a packing of the interior (63a-63d) with a plastic foam and/or a spacer element (78) which gives support to the carrier part (60a-60d) or to a further stiffening section formed of stiffening compound (64).

12. Carrier part according to any of the preceding claims, **characterised in that** the stiffening compound (64) is held in a hose which is flexible at least during introduction into the interior (63a-63d).

13. Carrier part according to any of the preceding claims, **characterised in that** it has several sections directly adjacent to one another and/or spaced apart and which are stiffened by the stiffening compound (64), wherein at least two sections advantageously have different degrees of strength and/or stiffness.

14. Carrier part according to any of the preceding claims, **characterised in that** the carrier part (60a-60d) forms part of a support structure (45a; 45b), in particular a cross-member (16), with which the trailer coupling (10a; 10b) may be fastened to the motor vehicle (17), or forms a coupling arm (12a, 12b) or a support profile of a load carrier.

## Revendications

1. Composant de support d'un attelage de remorque (10a ; 10b) destiné à un véhicule automobile (17) ou d'un support de charges apte à disposé au niveau d'une partie arrière d'un véhicule automobile (17), comprenant un corps tubulaire (67a - 67d), dans le cadre duquel une paroi périphérique (62a - 62d) délimite un espace intérieur (63a - 63d) s'étendant dans une direction d'extension longitudinale (65), sachant que l'espace intérieur (63a - 63d) est rigidifié au moins sur une section partielle de sa direction d'extension longitudinale (65), à l'aide d'une masse de rigidification (64), **caractérisé en ce que** la masse de rigidification (64) est apte à être déformée lors d'une introduction dans l'espace intérieur (63a - 63d) et contient des fibres de renforcement, lesdits fibres présentent une flexibilité différente et/ou une résistance à la traction différente.

2. Composant de support selon la revendication 1, **caractérisé en ce que** l'espace intérieur (63a - 63d) forme une cavité (72), au niveau au moins d'une section partielle de sa direction d'extension longitudinale (65).

3. Composant de support selon la revendication 1 ou 2, **caractérisé en ce que** la masse de rigidification (64) durcit après l'introduction dans la cavité (72).

4. Composant de support selon l'une quelconque des revendications précédentes, **caractérisé en ce que** la masse de rigidification (64) présente une résistance à la pression et/ou une résistance à la traction plus élevée qu'un matériau de base de la paroi périphérique.

5. Composant de support selon l'une quelconque des revendications précédentes, **caractérisé en ce que** la masse de rigidification (64) contient des fibres de renforcement en matière plastique et/ou métalliques et/ou de carbone.

6. Composant de support selon la revendication 5, **caractérisé en ce que** les fibres de matière plastique comprennent des fibres présentant une flexibilité différente et/ou une résistance à la traction différente.

7. Composant de support selon l'une quelconque des revendications précédentes, **caractérisé en ce que** la masse de rigidification (64) comprend une matière plastique et/ou du béton.

8. Composant de support selon la revendication 7, **caractérisé en ce que** le béton présente un comportement ductile du fait de l'ajout de fibres, en particulier des fibres présentant une flexibilité différente et/ou une résistance à la traction différente.

9. Composant de support selon l'une quelconque des revendications précédentes, **caractérisé en ce que** la masse de rigidification (64) contient le long de la direction d'extension longitudinale (65) et/ou de manière transversale par rapport à la direction d'extension longitudinale (65), des matériaux présentant une flexibilité ou une résistance différente.

10. Composant de support selon l'une quelconque des revendications précédentes, **caractérisé en ce que** la masse de rigidification (64) est soutenue au moins au niveau d'un côté par rapport à la direction d'extension longitudinale (65) par un élément de soutien (73) actif en particulier jusqu'à un durcissement de la masse de rigidification (64) et/ou lors d'un durcissement de la masse de rigidification (64).

11. Composant de support selon la revendication 10, **caractérisé en ce que** l'élément de soutien (73) comprend un garnissage en mousse de l'espace intérieur (63a - 63d) à l'aide d'une mousse en plastique et/ou un élément d'espacement (78), qui s'appuie au niveau du composant de support (60a - 60d) ou au niveau d'une autre section de rigidification formée à partir de la masse de rigidification (64).

12. Composant de support selon l'une quelconque des revendications précédentes, **caractérisé en ce que** la masse de rigidification (64) est logée dans un tuyau flexible au moins lors de l'introduction dans l'espace intérieur (63a - 63d).

13. Composant de support selon l'une quelconque des revendications précédentes, **caractérisé en ce que** ledit composant de support présente plusieurs sections disposées directement les unes à côté des autres et/ou tenues à distance les unes des autres, lesquelles sont raidies à l'aide de la masse de rigidification (64), sachant qu'au moins deux sections présentent de manière avantageuse des résistances et/ou des rigidités différentes.

14. Composant de support selon l'une quelconque des revendications précédentes, **caractérisé en ce que** le composant de support (60a - 60d) forme un élément d'une structure de support (45a ; 45b), en particulier d'un longeron (16), à l'aide de laquelle l'attelage de remorque (10a ; 10b) peut être fixé au niveau du véhicule automobile (17), ou un élément d'un bras d'attelage (12a, 12b) ou d'un profilé de support d'un support de charges.
